# EUROPÄISCHE PATENTSCHRIFT

(11) **EP 1 516 834 B1**
(45) Veröffentlichungstag und Bekanntmachung des Hinweises auf die Patenterteilung: **02.05.2007**
(21) Anmeldenummer: 04022278.8
(22) Anmeldetag: 18.09.2004
(51) Int. Cl.: B65G 35/06

(54) **Vorrichtung zum Transport genesteter Gebinde**
Device for transporting nested containers
Dispositif pour transporter les récipients emboîtés

(30) Priorität: 21.09.2003 DE 10345339
(43) Veröffentlichungstag der Anmeldung: 23.03.2005
(73) Patentinhaber: Inova Pharma Systems GmbH, 74523 Schwäbisch Hall (DE)
(72) Erfinder: Rothbauer, Jürgen, 74545 Michefeld (DE); Laukenmann, Bernd, 74564 Onolzheim (DE)
(74) Vertreter: Patentanwälte Ruff, Wilhelm, Beier, Dauster & Partner

(56) Entgegenhaltungen:
- EP-A- 1 106 541
- DE-U- 1 798 676
- US-A- 5 133 169

## Beschreibung

Die Erfindung betrifft eine Vorrichtung zum Transport genesteter Gebinde in einer Abfüllstation, gemäß dem Oberbegriff des Anspruchs 1.

Unter genesteten Gebinden versteht man Gebinde, die in einem Nest oder Magazin zur weiteren Verarbeitung angeordnet sind. Die weitere Verarbeitung besteht in der Regel aus dem Befüllen und dem anschließenden Verschließen. Vorzugsweise handelt es sich um Einwegspritzen, die genestet und steril verpackt in einer Box zur weiteren Verarbeitung bereitgestellt werden.

Bei einem bekannten Nesttransport mit Schlittensystem wird das Nest, beispielsweise in der für den Transport vorgesehenen engen Packung, in eine Zentrierplatte eingelegt, die auf einem Schlitten montiert ist. Die Zentrierplatte kann so gestaltet sein, dass jede einzelne Spritze aus dem Nest individuell zentriert wird. Das Nest wird vom Schlitten an der Beladeposition übernommen und zur Verarbeitungsstation, Abfüllen und Verschließen, transportiert. Nach der Bearbeitung wird das Nest mit dem Schlitten zur Entladeposition transportiert. Nach der Entnahme des Nestes mit den verschlossenen Gebinden aus dem Schlitten fährt dieser leer in die Beladeposition zurück, um ein neues Nest aufzunehmen. Er fährt dabei die gleiche Strecke zurück. Der Schlitten wird mit zwei gesteuerten Achsen angetrieben. Die erste Achse dient dem Transport in Transportrichtung, während die zweite Achse, die quer verläuft, den Versatz der Reihen von Gebinden ausgleichen soll. Die Gebinde sind so angeordnet, dass die jeweils folgende Reihe um einen halben Gebindeabstand gegenüber der vorhergehenden Reihe versetzt ist. Auf diese Weise lässt sich die Packungsdichte vergrößern.

Durch die Zentrierplatte sind alle Spritzen während des Transports genau fixiert und können somit ohne weiteren Aufwand direkt verarbeitet werden. Der Transportschlitten kann taktweise an jede beliebige Stelle individuell gesteuert werden.

Während des Entladens des Schlittens, des Rücktransports des leeren Schlittens und seiner erneuten Beladung kann die Vorrichtung allerdings nicht füllen und verschließen, so dass die Vorrichtung eine begrenzte Ausbringungsleistung aufweist.

Es ist ebenfalls ein Transportsystem vorgeschlagen worden, bei dem das Nest in einen aus Riemen oder Ketten bestehen Transporteur eingelegt wird, der Mitnehmer aufweist. Durch die Mitnehmer ist das Transportsystem in gleichmäßige Einheiten aufgeteilt, die jeweils ein Nest aufnehmen können. Bei diesem Transportsystem muss an den Bearbeitungsstationen jeweils eine Spritzenreihe im Nest freigestellt werden, um eine Zentrierung zu ermöglichen. Dies geschieht über zusätzliche Bewegungen, nämlich das Anheben der Spritzen und ihre Zentrierung mit Hilfe von Greifern. Durch dieses endlose Transportsystem ist es möglich, Nest an Nest zu transportieren, so dass keine Totzeiten auftreten, in denen der Transporteur eine Leerfahrt macht.

Durch die Zentrierung der einzelnen Spritzenreihen verringert sich die Maschinenleistung, da sich die Transportzeit erhöht. Durch die für das Zentrieren und Anheben benötigten Einrichtungen ist es hierbei nicht möglich, die Spritzen unmittelbar nach dem Befüllen zu verschließen. Dies ist aber einer Forderung in der Pharmazie.

Weiterhin ist eine Fördervorrichtung für Transportwagen bekannt (EP 11065411), bei der Transportwagen taktweise von Arbeitsplatz zu Arbeitsplatz weiter bewegt werden können. An jedem Arbeitsplatz werden auf den Transportwagen liegende Leiterplatten bestückt.

Bei einer ähnlichen Einrichtung (DE-U 1798676) werden mit Laufrollen in einer Zwangsführung laufende einzelne Arbeitstische von Bearbeiter zu Bearbeiter weiter geschoben.

Der Erfindung liegt die Aufgabe zu Grunde, eine Vorrichtung zum Transport genesteter Gebinde in einer Abfüllstation zu schaffen, die eine erhöhte Ausbringungsleistung bei gleichzeitiger Erfüllung der pharmazeutischen Anforderungen ermöglicht.

Zur Lösung dieser Aufgabe schlägt die Erfindung eine Vorrichtung mit den im Anspruch 1 genannten Merkmalen vor. Weiterbildungen der Erfindung sind Gegenstand von Unteransprüchen.

Die Vorrichtung nach der Erfindung enthält also ein Schienenmittel, das jetzt aus zwei Schienensträngen besteht. Auf den Schienen sind zwei Transportwagen unabhängig voneinander verfahrbar. Der eine Transportwagen kann das Nest mit der Zentrierplatte enthalten und an der Abfüllstation taktweise vorwärts bewegt werden, so dass die in ihm enthaltenen in der Zentrierplatte schon zentrierten Gebinde taktweise befüllt und unmittelbar anschließend verschlossen werden. Unabhängig von der Position dieses Transportwagens kann der zweite Transportwagen die verschlossenen Gebinde zu einer Entnahmestelle bringen, wo sie aus dem Wagen entnommen werden. Der leere Transportwagen kann wieder in eine Position gebracht werden, wo er mit einem neuen Nest befüllt wird. Der Transport des zweiten Transportwagens, also desjenigen Transportwagens, der gerade nicht an der Befüllstation die Füllvorgänge vermittelt, ist vollkommen unabhängig von dem Transport des ersten Transportwagens. Bei einer. Leerfahrt braucht auch keine Taktung vorgenommen zu werden, so dass sich der Antrieb einfacher gestalten kann. Die Leerfahrt kann auch mit einer langsameren Geschwindigkeit vor sich gehen, oder auch mit einer schnelleren Geschwindigkeit, vollkommen unabhängig von dem taktweisen Transport des ersten Transportwagens in der Abfüllstation.

Um den Transportwagen aus dem ersten Schienenstrang, der an der Abfüllstation vorbei führt, in den zweiten Schienenstrang umzusetzen, kann an beiden Enden eine Umsetzeinrichtung vorhanden seien. Diese kann ebenfalls vollkommen unabhängig von den Antrieben der beiden Transportwagen arbeiten.

Beispielsweise kann die Übergabeeinrichtung an jedem Ende des Schienenmittels je ein Schienenstück aufweisen, das aus einer Ausrichtung mit dem einen Schienenstrang in die Ausrichtung mit dem anderen Schienenstrang verschoben werden kann. Die Länge des Schienenstücks entspricht dabei etwa der Länge des Transportwagens, kann auch etwas größer sein. Der Transportwagen wird also am Ende dieses Schienenstrangs auf das in Verlängerung des Schienenstrangs angeordnete Schienenstück aufgeschoben, worauf dann dieses Schienenstück so verschoben wird, bis es in Ausrichtung mit dem anderen Schienenstrang angeordnet ist. Von dort aus kann der Transportwagen dann den zweiten Schienenstrang entlang verschoben werden. Dann wird anschließend das Schienenstück wieder zurück geschoben.

Beide Transportwagen sind mit Ausnahme der Verbindung mit ihrem Antrieb identisch ausgebildet, so dass auf diese Weise die Orientierung des Transportwagens und seiner Aufnahme für das Nest erhalten bleibt.

Vorzugsweise können bei der Schienenstränge parallel zueinander verlaufen.

Die Übergabeeinrichtung kann mit Vorteil so ausgebildet sein, dass sie die Transportwagen nur in einer Richtung übergibt, also beispielsweise am einen Ende des an der Abfüllstation vorbeiführenden Schienenstrangs den Transportwagen nur auf den zurückführende Schienenstrang übergibt, nicht aber in umgekehrter Richtung. Denn die Vorrichtung wird im Normalfall nur in einer Richtung von den Transportwagen durchlaufen.

Die beiden Antriebe zum Antrieb jeweils eines Transportwagens können mit Vorteil voneinander unabhängig und getrennt arbeiten. Beispielsweise können beide Antriebsmittel längs einer eigenen Schiene verschiebbar sein, so dass sich die Wagen aneinander vorbei bewegen können.

Insbesondere kann vorgesehen sein, dass die Antriebe mit den Transportwagen über einen Mitnehmer derart verbunden sind, dass die Übergabe von einem Schienenstrang auf den anderen Schienenstrang ermöglicht ist. Der Mitnehmer kann also diese Übergabebewegung mitmachen, während in diesen Abschnitt der Antrieb stehen bleibt.

Erfindungsgemäß kann vorgesehen sein, dass beide Schienenstränge übereinander angeordnet sind. Dadurch vergrößert sich der Platzbedarf der Anlage, die in erster Linie durch die Grundfläche der Anlage bestimmt ist, nicht.

Es ist aber ebenfalls möglich und liegt im Rahmen der Erfindung, dass beide Schienenstränge nebeneinander angeordnet werden, falls dies im Einzelfall aus Platzgründen oder sonstigen Gründen gewünscht ist.

Die Abfüllstation ist mit Vorteil oberhalb des oberen Schienenstrangs angeordnet, falls die Schienenstränge übereinander angeordnet sind.

Bei der übereinander Anordnung der beiden Schienenstränge lässt sich die Bewegung dann besonders günstig einleiten, wenn nach einem weiteren Merkmal der Erfindung die Mitnehmer auf gegenüberliegenden Seiten der Schienenstränge angeordnet sind.

Die Abgabestelle, an der die verschlossenen Gebinde entnommen werden, kann erfindungsgemäß an dem der Aufgabestelle entgegengesetzten Ende des Schienenstrangs angeordnet sein. Sie kann sowohl an dem einen als auch an dem anderen Schienenstrang gebildet werden. Es ist aber ebenfalls möglich und wird durch die Erfindung zugelassen, dass die Abgabestelle etwa an der gleichen Stelle ist, wo auch die Aufgabestelle angeordnet ist.

Weitere Merkmale, Einzelheiten und Vorzüge der Erfindung ergeben sich aus der folgenden Beschreibung einer bevorzugten Ausführungsform, den Patentansprüchen und der Zusammenfassung, deren beider Wortlaut durch Bezugnahme zum Inhalt der Beschreibung gemacht wird, sowie anhand der Zeichnung. Hierbei zeigen:
- Figur 1: schematisch eine Seitenansicht der Transportvorgänge in der Anlage;
- Figur 2: eine Stirnansicht der in Figur 1 dargestellten Transportvorrichtung.

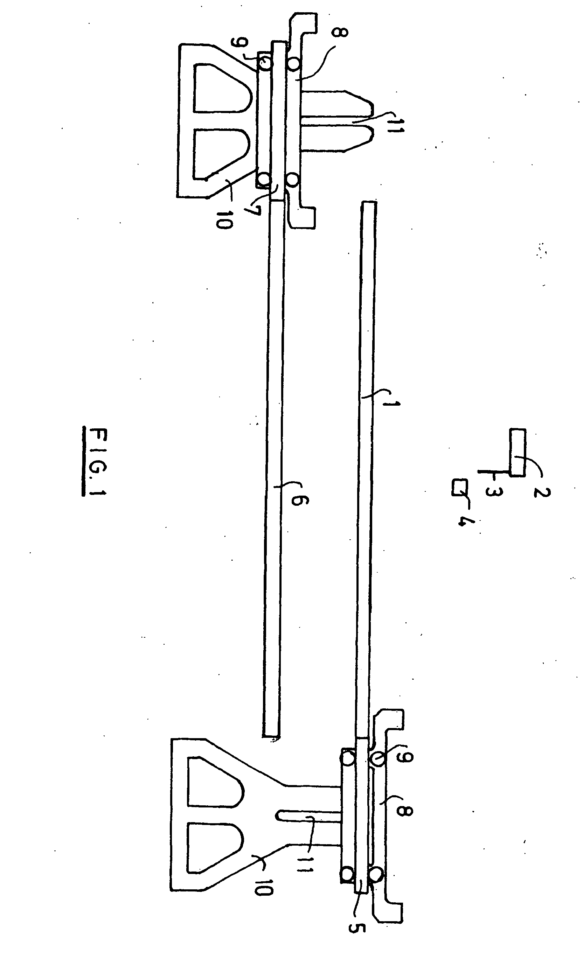

Figur 1 zeigt stark schematisch die Art, wie ein Nest von Gebinden in einer Anlage zur Befüllung der Gebinde transportiert werden kann. Es ist ein erster Schienenstrang 1 vorhanden, der horizontal verläuft. Er kann beispielsweise aus zwei Schienen bestehen, wie dies bei Schienenpaaren üblich ist. Es könnte aber auch eine einzelne Schiene vorhanden sein. Der Schienenstrang 1 führt unter einer Abfüllstation 2 mit einzelnen Füllnadeln 3 und einer Verschließstation 4 vorbei. Da die Gebinde zunächst befüllt und anschließend verschlossen werden, zeigt die Anordnung von Abfüllstation 2 und Verschließstation 4 die Transportrichtung an, die in Figur 1 von links nach rechts zeigt. Am Ende des Schienenstrangs 1 ist ein in seiner Verlängerung ausgerichtetes einzelnes Schienenstück 5 vorhanden, dass eine Fortsetzung des Schienenstrangs 1 darstellt.

Unterhalb des Schienenstrangs 1 ist ein zweiter Schienenstrang 6 vorhanden, der ebenfalls horizontal verläuft. Er hat etwa die gleiche Länge und die gleiche Anordnung wie der erste Schienenstrang 1 und ist in seiner Funktion identisch aufgebaut. In der Darstellung der Figur 1 ist an dem gegenüberliegenden Ende ebenfalls ein Schienenstück 7 in Verlängerung des Schienenstrangs 6 und diesem gegenüber ausgerichtet angeordnet.

Auf beiden Schienensträngen 1, 6 sind zwei Transportwagen 8 verschiebbar geführt, von denen in der Darstellung der Figur 1 beide Transportwagen 8 gerade auf den einzelnen Schienenstücken 5 bzw. 7 positioniert sind. Beide Transportwagen 8 können längs der Schienenstränge 1 bzw. 6 verschoben werden. Sie sind jeweils mit Hilfe von zwei Rollenpaaren 9 verschiebbar, so dass sie sich leicht mit geringem Rollwiderstand und ruckfrei verschieben lassen.

Durch eine nicht dargestellte Verschiebeeinrichtung lässt sich jedes Schienenstück 5, 7 aus der Ausrichtung mit dem jeweils einen Schienenstrang 1 bzw. 6 in Ausrichtung und Verlängerung mit dem jeweils anderen Schienenstrang 6, 1 verschieben. Auf diese Weise ist es möglich, einen Transportwagen 8 von dem einen Schienenstrang auf den anderen Schienenstrang umzusetzen. Die beiden Verschiebeeinrichtungen für die Schienenstücke 5, 7 arbeiten unabhängig voneinander. Es können also beispielsweise beide Schienenstücke 5, 7 in Ausrichtung mit dem oberen Schienenstrang 1 oder auch mit dem unteren Schienenstrang 6 angeordnet werden, und es können auch beide Transportwagen 8 zu einem bestimmten Zeitpunkt auf dem gleichen Schienenstrang 1 oder 6 angeordnet sein.

Für jeden Transportwagen 8 gibt es einen eigenen genau diesem Transportwagen 8 zugeordneten Antrieb. Der Antrieb enthält einen Antriebsschieber 10, der in Figur 1 von links nach rechts und zurück verschoben werden kann. Der Antriebsschieber 10 enthält einen senkrecht verlaufenden Schlitz 11, der oben offen oder auch geschlossen sein kann. In diesen Schlitz greift ein in Figur 1 nicht zu sehender Mitnehmer des Transportwagens 8 ein. Die Länge des Schlitzes 11 ist so bemessen, dass dieser Mitnehmer in Eingriff mit dem Schlitz 11 in jeder Position des Schienenstücks 5, 7 steht. Wenn sich das Schienenstück 5 bzw. 7 in seiner unteren Position befindet, siehe links in Figur 1, greift der Mitnehmer am unteren Ende des Schlitzes 11 in diesen ein. Bei der oberen Position des Schienenstücks 5, 7, siehe rechts in Figur 1, ist der Mitnehmer immer noch im Schlitz 11 enthalten. Die Transportwagen 8 sind also nur in Transportrichtung der Schienenstränge 1, 6 mit dem Antriebsschieber 10 verbunden, in einer Richtung senkrecht zu der Transportrichtung der Schienenstränge 1, 6 dagegen nicht.

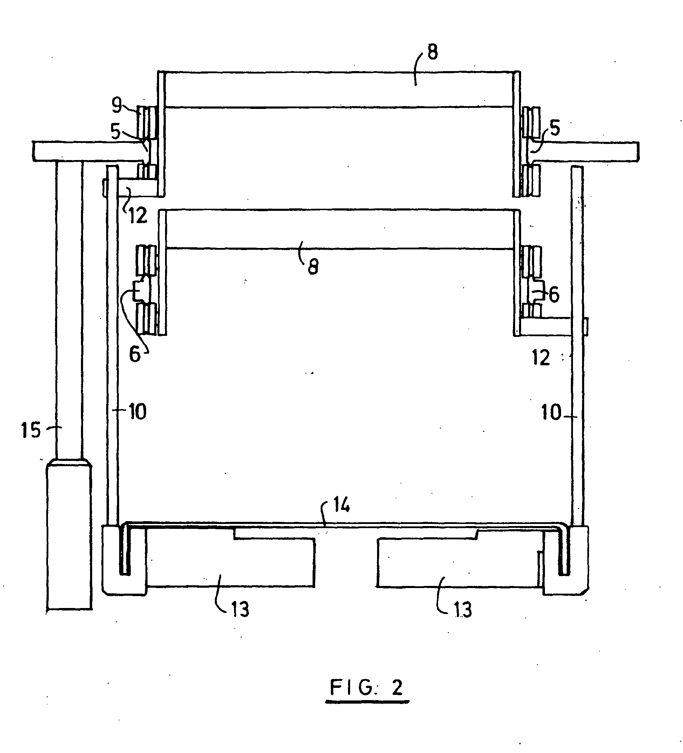

Nun zu Figur 2. Figur 2 zeigt eine Art Stirnansicht bzw. einen Schnitt durch die Anordnung der Figur 1 etwa längs Linie II-II. Der obere Transportwagen 8 ist mit dem Rollenpaar 9 auf dem in Verlängerung des oberen Schienenstrangs 1 angeordneten Schienenstück 5 positioniert. An der in Figur 2 linken Seite des Transportwagens 8 greift der erwähnte Mitnehmer 12 durch den Schlitz 11 des Antriebsschiebers 10 hindurch. An der gegenüberliegenden Seite gibt es keinen derartigen Mitnehmer 12. Hier wird der Transportwagen 8 nur durch das Rollenpaar 9 an dem Schienenstück 5 geführt.

Das untere Ende des Antriebsschiebers 10 ist mit einem senkrecht zur Papierebene verschiebbaren gekapselten Antrieb 13 verbunden. Die Bewegung des Antriebsschiebers 10 senkrecht zur Papierebene, die durch den Antrieb 13 bewirkt wird, nimmt den Transportwagen 8 wegen des Eingriffs des Mitnehmers 12 mit.

Der zweite auf dem unteren Schienenstrang 6 mit dem Rollenpaar 9 geführte Transportwagen 8 hat an der gegenüberliegenden Seite, also in Figur 2 rechts, den Mitnehmer 12, der durch den entsprechenden Schlitz 11 des Antriebsschiebers 10 hindurch greift. Dieser Antriebsschieber 10 hat einen eigenen ähnlich aufgebauten Antrieb 13, der gekapselt unterhalb eines Bodenblechs 14 angebracht ist. Beide Antriebe 13 arbeiten unabhängig voneinander, so dass die beiden Transportwagen auch unabhängig voneinander bewegt werden können.

Beide Schienenstücke 5, 7 haben einen eine Verschiebeeinrichtung bildenden Antrieb, der in Figur 2 als hydraulischer Kolben 15 angedeutet ist. Er soll nur schematisch die Möglichkeit anzeigen, wie ein Schienenstück 5,7 aus der Ausrichtung mit dem oberen Schienenstrang 1 in einer Ausrichtung mit dem unteren Schienenstrang 6 gebracht werden kann.

Wie man der Figur 2 ebenfalls entnehmen kann, ist zwischen den beiden Transportwagen 8 ein gewisser Abstand vorhanden. Beide Transportwagen dienen zur Aufnahme eines Nestes mit Gebinden. Die beiden Transportwagen 8 können aneinander vorbei bewegt werden, da die beiden Antriebe 13 sich in ihrer Bewegung ebenfalls nicht stören. Zurück zu Figur 1. Die Arbeitsweise der Vorrichtung kann folgendermaßen ablaufen. Der in Figur 1 linke Transportwagen 8 wird durch Betätigen des Antriebs der Verschiebeeinrichtung für das Schienenstück 7 nach oben geschoben, bis das Schienenstück 7 in Ausrichtung gegenüber dem Schienenstrang 1 angeordnet ist. Dies kann beispielsweise die Aufgabeposition sein, in der ein Nest mit zu befüllenden Gebinden eingelegt wird. In dem Transportwagen 8 kann die eingangs erwähnte Zentrierplatte angeordnet sein. Nach dem Einlegen des Gebindes in die Zentrierplatte erfolgt die Zentrierung und anschließend wird der Transportwagen 8 bis zu der Abfüllstation fort bewegt, gesteuert über eine Steuerung und einen Servomotor. Sobald die erste Reihe des Nestes von Gebinden die Abfüllstation 2 erreicht hat, wird der Transportwagen 8 taktweise um jeweils einen Reihenabstand weiter getaktet, und die einzelnen Gebinde werden durch die Füllstation 2 befüllt und anschließend durch die Verschließstation 4 verschlossen. Sobald alle Gebinde des Nestes gefüllt und verschlossen sind, kann der Transportwagen 8 jetzt kontinuierlich ganz nach rechts bewegt werden, bis er die in Figur 1 rechts dargestellte Position einnimmt. In dieser Position kann das gefüllte und verschlossene Nest entnommen werden. Anschließend wird der Transportwagen nach unten geschoben und kontinuierlich über den unteren Schienenstrang 6 zurück geschoben, bis er wieder in die Aufgabeposition gelangt ist. Während er zurück bewegt wird, kann der zweite Transportwagens mit einem Nest leerer Gebinde versehen und an der Befüllstation 2 befüllt werden. Die Rolle der beiden Transportwagen 8 wechselt sich ständig ab. Dadurch wird eine endlose Kette für das Abfüllen gebildet.

Da die benachbarten Reihen in der Zentrierplatte um den halben Gebindeabstand versetzt angeordnet sind, erfolgt einer Querbewegung entweder des Transportwagens auf dem Schienenstrang 1, oder der Zentrierplatte auf dem Transportwagen, oder des Schienenstrangs 1.

Dies ist im Einzelnen nicht dargestellt, da es dem Stand der Technik entspricht.

## Patentansprüche

1. Vorrichtung zum Transport von Artikeln in einer Arbeitstation, mit
einem eine Transportrichtung bildenden Schienenmittel, das
einen ersten von einer Aufgabestelle an einer Arbeitstation (2) vorbei führenden Schienenstrang (1) und
einen zweiten zurück führenden Schienenstrang (6) aufweist,
zwei unabhängig voneinander auf beiden Schienensträngen (1, 6) verschiebbaren Transportwagen (8) für jeweils mindestens ein Artikel,
je einem Antrieb für jeden Transportwagen (8), sowie mit
je einer Übergabeeinrichtung an beiden Enden des Schienenmittels zu Übergabe eines Transportwagens (8) von einem Schienenstrang (1, 6) auf den anderen (6, 1), **dadurch gekennzeichnet, dass** die vorrichtung zum Transport genesteter Gebinde in einer Abfüllstation, angeordnet ist, wobei
der Antrieb mindestens für den das Gebinde aufweisenden Transportwagen (8) derart ausgebildet ist, dass er den Transportwagen (8) um einen Reihenabstand von Gebinden taktend vorwärts an einer Abfüllstation vorbei bewegen kann.

2. Vorrichtung nach Anspruch 1, bei der beide Schienenstränge (1, 6) parallel zueinander verlaufen.

3. Vorrichtung nach Anspruch 1 oder 2, bei der die Übergabeeinrichtung jeweils nur in einer Richtung arbeitet.

4. Vorrichtung nach einem der vorhergehenden Ansprüche, bei der die beiden Antriebe für die beiden Transportwagen (8) getrennt voneinander arbeiten.

5. Vorrichtung nach einem der vorhergehenden Ansprüche, bei der beide Antriebe für die Transportwagen (8) und längs einer eigenen Schiene verschiebbar sind.

6. Vorrichtung nach einem der vorhergehenden Ansprüche, bei der die Antriebe mit den Transportwagen (8) über jeweils einen Mitnehmer (12) derart verbunden sind, dass die Übergabebewegung von einem Schienenstrang (1, 6) auf den anderen Schienenstrang (6, 1) ermöglicht ist.

7. Vorrichtung nach einem der vorhergehenden Ansprüche, bei der beide Schienenstränge (1, 6) übereinander angeordnet sind.

8. Vorrichtung nach einem der vorhergehenden Ansprüche, bei der die Abfüllstation (2) und/oder eine Verschließstation (4) oberhalb des oberen Schienenstrang (1) angeordnet ist.

9. Vorrichtung nach einem der Ansprüche 6 bis 8, bei der die Mitnehmer auf gegenüberliegenden Seiten der Schienenstränge (1,6) angeordnet sind.

10. Vorrichtung nach einem der Ansprüche 1 bis 6, bei der beide Schienenstränge nebeneinander angeordnet sind.

11. Vorrichtung nach einem der vorhergehenden Ansprüche, mit einer Abgabestelle für die Nester mit gefüllten und verschlossenen Gebinden an dem der Aufgabestelle entgegengesetzten Ende der Schienenstränge.

12. Vorrichtung nach einem der vorhergehenden Ansprüche, bei der die Übergabeeinrichtung ein Schienenstück (5, 7) aufweist, dessen Länge der Länge eines Transportwagens (8) etwa entspricht, und das aus der Ausrichtung mit dem einen Schienenstrang (1, 6) in eine Ausrichtung mit dem jeweils anderen Schienenstrang (6, 1) verschiebbar ist.

## Claims

1. Device for transporting articles in a workstation, with
rail means forming a direction of transportation, which
has a first rail track (1) leading from a receiving site past a workstation (2), and
a second returning rail track (6),
two transport cars (8) independently movable on both rail tracks (1, 6) for at least one article each,
one drive for each transport car (8), with
a transfer device on both ends of the rail means to transfer a transport car (8) from one rail track (1, 6) to the other (6, 1),
**characterized in that** the device is arranged to transport nested containers in a filling station, wherein
the drive at least for the transfer car (8) having the container is designed such that it can advance the transport car (8) in a cycle by one row of containers past a filling station.

2. Device according to claim 1, in which the two rail tracks (1,6) run parallel to one another.

3. Device according to claim 1 or 2, in which the transfer device only works in one direction.

4. Device according to one of the preceding claims, in which the two drives for the two transport cars (8) work independent of one another.

5. Device according to one of the preceding claims, in which the two drives for the transport cars (8) can be moved on their own rail.

6. Device according to one of the preceding claims, in which the drives are connected with the transport cars (8) by means of a catch (12) so that the transfer movement from one rail track (1, 6) to the other rail track (6, 1) is possible.

7. Device according to one of the preceding claims, in which the rail tracks (1, 6) are above one another.

8. Device according to one of the preceding claims, in which the filling station (2) and/or a sealing station (4) are above the top rail track (1).

9. Device according to one of claims in 6 to 8, in which the catches are on opposite sides of the rail tracks (1, 6).

10. Device according to one of claims 1 to 6, in which the two rail tracks are adjacent to one another.

11. Device according to one of the preceding claims with a discharge site for the nests with filled and sealed containers on the opposite end of the rail tracks from the receiving site.

12. Device according to one of the preceding claims, in which the transfer device has a rail section (5, 7) whose length approximately corresponds to the length of a transport car (8), and which can be moved out of the alignment with one rail track (1, 6) and into alignment with the other rail track (6, 1).

## Revendications

1. Dispositif de transport d'articles dans une station de travail, comprenant
un moyen à rails formant une direction de transport, qui présente
une première file de rails (1) menant d'un poste d'alimentation à une station de travail (2) en passant devant et
une deuxième file de rails (6) ramenant en arrière,
deux chariots de transport (8), déplaçables indépendamment l'un de l'autre sur les deux files de rails (1, 6), pour respectivement au moins un article, respectivement un entraînement pour chaque chariot de transport (8), ainsi que
respectivement un dispositif de transfert aux deux extrémités du moyen à rails pour le transfert d'un chariot de transport (8) d'une file de rails (1, 6) à l'autre (6, 1), **caractérisé en ce que** le dispositif disposé pour le transport d'articles est dans une station de travail,
l'entraînement pour au moins le chariot de transport (8) présentant l'emballage étant exécuté de telle manière qu'il peut avancer en cadence le chariot de transport (8) d'un écartement entre les rangées d'emballages, en passant devant une station de remplissage.

2. Dispositif selon la revendication 1, dans lequel les deux files de rails (1, 6) sont parallèles l'une à l'autre.

3. Dispositif selon la revendication 1 ou 2, dans lequel le dispositif de transport ne travaille respectivement que dans une direction.

4. Dispositif selon l'une quelconque des revendications précédentes, dans lequel les deux entraînements pour les deux chariots de transport (8) travaillent séparément l'un de l'autre.

5. Dispositif selon l'une quelconque des revendications précédentes, dans lequel les deux entraînements pour les chariots de transport (8) sont déplaçables et déplaçables le long d'un propre rail.

6. Dispositif selon l'une quelconque des revendications précédentes, dans lequel les entraînements sont raccordés aux chariots de transport (8) par l'intermédiaire de respectivement un entraîneur (12), de telle manière que le mouvement de transfert d'une file de rails (1, 6) à l'autre file de rails (6, 1) soit possible.

7. Dispositif selon l'une quelconque des revendications précédentes, dans lequel les deux files de rails (1, 6) sont disposées l'une au-dessus de l'autre.

8. Dispositif selon l'une quelconque des revendications précédentes, dans lequel la station de remplissage (2) et/ou la station de bouchage (4) sont disposées au-dessus de la file de rails supérieure (1).

9. Dispositif selon l'une quelconque des revendications 6 à 8, dans lequel les entraîneurs sont disposés sur des côtés opposés des files de rails (1, 6).

10. Dispositif selon l'une quelconque des revendications 1 à 6, dans lequel les deux files de rails sont disposées l'une à côté de l'autre.

11. Dispositif selon l'une quelconque des revendications précédentes, doté d'un poste de sortie, pour les nids comprenant des emballages remplis et fermés, sur l'extrémité, opposée au poste d'alimentation, des files de rails.

12. Dispositif selon l'une quelconque des revendications précédentes, dans lequel le dispositif de transfert présente une pièce en rails (5, 7) dont la longueur correspond environ à la longueur d'un chariot de transport (8) et qui est déplaçable de l'alignement avec la première file de rails (1, 6) dans un alignement avec respectivement l'autre file de rails (6, 1).
